Europäisches Patentamt

European Patent Office

Office européen des brevets

(19)

(11) Numéro de publication: **0 201 370**

**A1**

(12) ## DEMANDE DE BREVET EUROPEEN

(21) Numéro de dépôt: **86400667.1**

(22) Date de dépôt: **27.03.86**

(51) Int. Cl.4: **H04B 9/00**

(30) Priorité: **02.04.85 FR 8505009**

(43) Date de publication de la demande:
**17.12.86 Bulletin 86/46**

(84) Etats contractants désignés:
**CH DE GB IT LI**

(71) Demandeur: **THOMSON-CSF**
**173, Boulevard Haussmann**
**F-75379 Paris Cedex 08(FR)**

(72) Inventeur: **d'Humieres, Etienne**
**THOMSON-CSF SCPI 19, avenue de Messine**
**F-75008 Paris(FR)**
Inventeur: **Eumurian, Grégoire**
**THOMSON-CSF SCPI 19, avenue de Messine**
**F-75008 Paris(FR)**
Inventeur: **Fasse, Dominique**
**THOMSON-CSF SCPI 19, avenue de Messine**
**F-75008 Paris(FR)**

(74) Mandataire: **Trocellier, Roger et al**
**THOMSON-CSF SCPI 19, avenue de Messine**
**F-75008 Paris(FR)**

(54) **Système de transmission d'information de type analogique par conducteur optique, à très faible consommation.**

(57) Système permettant de réduire considérablement la consommation électrique au repos et d'améliorer le rapport signal/bruit.

Il comporte un montage doublé avec au départ de la liaison deux diodes photoémettrices (DE1, DE2) alimentées de manière à former un circuit push-pull travaillant en classe B, ou AB. Les signaux lumineux transmis par deux fibres respectives (F1, F2) correspondent aux parties positives et négatives du signal $(V_e)$ et sont reçus respectivement par deux diodes photodétectrices. Selon le sens de montage des diodes réceptrices, le circuit de sommation en aval sera constitué soit par un circuit sommateur, par exemple un sommateur à résistances (R5,R6,R7), soit par un circuit soustracteur, par exemple un amplificateur différentiel cateur différentiel.

L'invention s'applique à la transmission de signaux analogiques ou de signaux numériques à trois états.

FIG_1

## SYSTEME DE TRANSMISSION D'INFORMATION DE TYPE ANALOGIQUE PAR CONDUCTEUR OPTIQUE, A TRES FAIBLE CONSOMMATION

La présente invention concerne des perfectionnements aux systèmes de transmission d'information par conducteur optique, notamment pour la transmission d'informations analogiques, de manière à accroître les performances de la liaison, en particulier du point de vue de la consommation.

Une liaison optique analogique conventionnelle comporte un émetteur à diode photoémettrice pour moduler un signal lumineux d'émission par un signal électrique représentant l'information à transmettre, un conducteur optique couplé par une première extrémité à la diode photoémettrice et par sa deuxième extrémité à un récepteur à diode photodétectrice pour transmettre à celle-ci le signal lumineux modulé et pour effectuer la transformation inverse qui reproduit le signal électrique d'entrée. Dans une telle configuration la diode photoémettrice doit travailler en classe A. En conséquence, une source d'alimentation annexe produit un courant de polarisation non négligeable qui permet de placer le point de fonctionnement sur une zone linéaire de la caractéristique de réponse de la diode et il s'ensuit, en l'absence de signal, une puissance dissipée non négligeable. De plus, l'excursion en puissance est limitée compte tenu en particulier de la puissance maximale de fonctionnement à envisager pour la diode. Il en résulte également un rapport signal/bruit limité. A titre indicatif, l'excursion de puissance pourra être de l'ordre de $50\mu$ W de part et d'autre de la puissance moyenne au point de fonctionnement, celle-ci pouvant se situer également à la valeur $50\mu$ W, ce qui signifie une puissance maximale de $100\mu$ W.

Le but de l'invention est de remédier aux inconvénients et limitations précités en proposant une solution qui autorise une très faible consommation, une diminution du bruit par accroissement du rapport signal/bruit, ainsi que d'autres avantages qui apparaîtront ultérieurement.

L'invention propose de réaliser un système de transmission d'information par conducteur optique, couplé respectivement par ses extrémités à une diode photoémettrice et à une diode photoréceptrice, la diode photoémettrice étant polarisée à un point de fonctionnement déterminé et modulé par un courant variable formé de parties positives et de parties négatives qui représentent l'information à transmettre, le système étant caractérisé en ce que le montage formé des diodes et du conducteur optique est doublé, les diodes photoémettrices étant connectées en série, de sens inverse et polarisées en sorte d'obtenir un montage push-pull, lesdites parties positives étant transmises par un premier conducteur optique et les parties négatives par le deuxième conducteur optique aux diodes photoréceptrices respectives, ces dernières étant connectées à un circuit sommateur pour additionner avec le signe approprié les signaux détectés correspondant auxdites parties positives et négatives et reconstituer ladite information.

Les particularités et avantages de la présente invention apparaîtront dans la description qui suit donnée à titre d'exemple, à l'aide des figures annexées qui représentent:

-Figure 1, un schéma général d'un système de transmission optique conforme à l'invention;

-Figures 2 et 3, des courbes relatives au fonctionnement en classe B et AB respectivement du montage selon la figure 1 ;

-Figure 4, une variante de réalisation de l'émetteur ;

-Figures 5 à 10, des variantes de réalisation du récepteur ;

-Figure 11, un schéma de réalisation d'un montage amplificateur transimpédance ;

Figure 12, des courbes d'ondes relatives à l'élimination des signaux de parasites ;

-Figure 13, un schéma partiel du récepteur équipé d'un circuit détecteur de parasites ;

-Figure 14, un schéma de la liaison équipé de moyens d'équilibrage dynamique à base de dispositif atténuateur optique interposé dans la liaison.

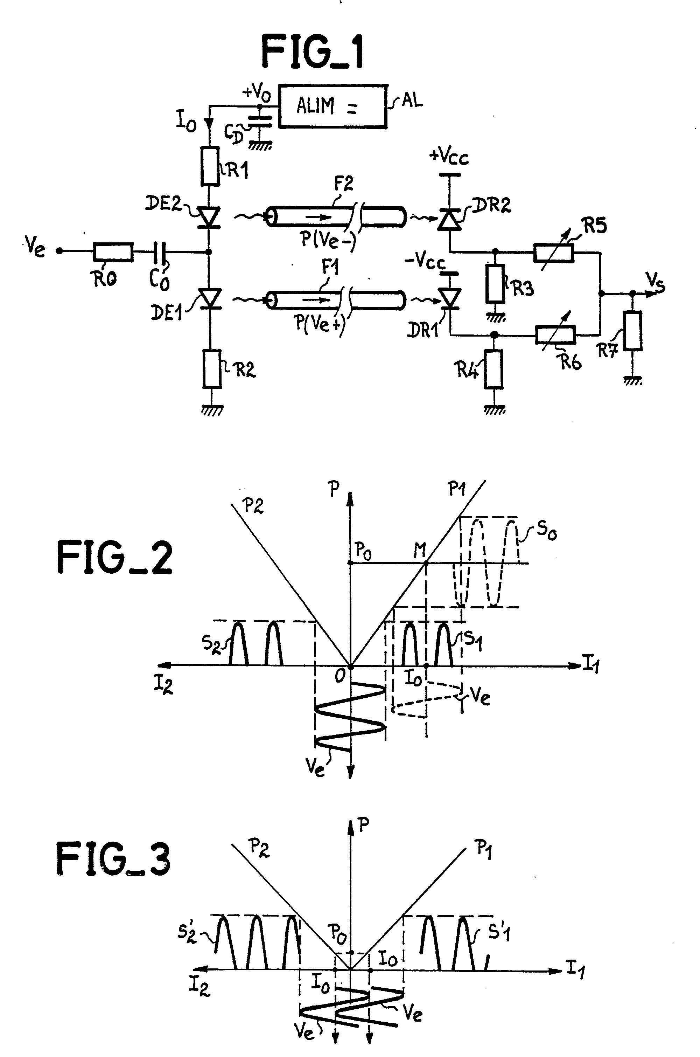

En se reportant à la figure 1, on retrouve les éléments constituant une liaison optique classique, une diode d'émission électroluminescente DE1 couplée à une fibre optique F1 qui est elle-même couplée par son autre extrémité à une diode de photoréceptrice PIN ou APD (à avalanche). Pour la transmission d'information analogique la diode DE1 doit travailler en classe A comme représenté sur la figure 2 en considérant les signaux à droite de la figure de coordonnée $I_o$ $P_o$. Une source extérieure produit une alimentation $+V_o$ qui entraîne le passage d'un courant de polarisation $I_o$ à travers la

diode. Le signal d'entrée $V_e$ analogique, tel une sinusoïde, et transmis à la diode par l'intermédiaire d'un élément résistif R0 et d'un couplage capacitif C0 de manière à se superposer à la composante $I_o$ de polarisation. Le point de fonctionnement est choisi dans une plage linéaire représentée par la droite $P$, qui représente la variation de la puissance lumineuse fournie par la diode en fonction du courant $I$, qui la traverse. Le signal $S_o$ est celui produit pour le fonctionnement en classe A. En l'absence de signal analogique $V_e$ à l'entrée le point de fonctionnement M correspond à une consommation continue $P_o$ dans la diode produite par le passage du courant de polarisation $I_o$.

Suivant l'invention, le montage est doublé. Il comporte deux fibres optiques F1, F2 couplées du côté émission, par une première extrémité, respectivement à deux diodes électroluminescentes DE1 et DE2 et par leur autre extrémité, du côté réception, à deux diodes photoréceptrices DR1 et DR2. Le courant de polarisation $I_o$ circulant dans le montage du côté émission est déterminé par la tension $+ V_o$ de la source d'alimentation continue AL et par la résistance présentée par le circuit, notamment par les résistances R1 et R2 connectées en série avec les diodes. Cette résistance de charge est choisie assez grande de manière à obtenir un courant $I_o$ très faible et un fonctionnement du montage correspondant à la classe B ou AB.

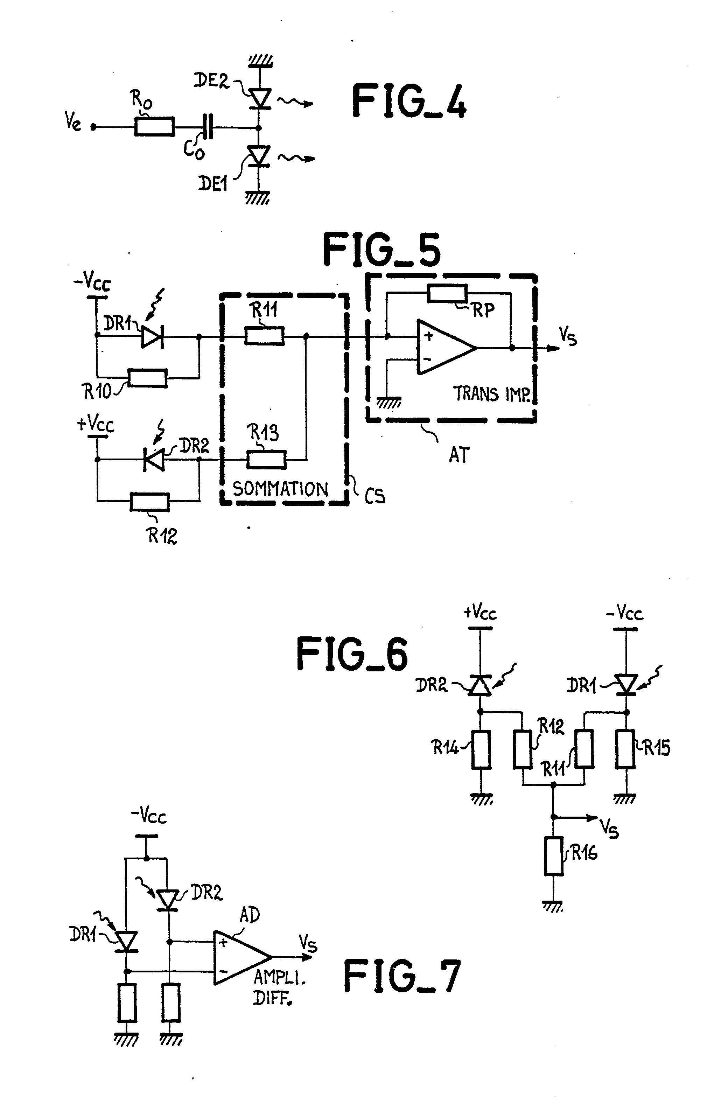

Le fonctionnement en classe B correspond à un courant de polarisation pratiquement nul comme représenté sur la figure 2 avec les courants $I_1$ et $I_2$ dans les diodes respectives DE1 et DE2. Ces courants résultent respectivement des alternances positives et négatives du signal $V_e$. Les impulsions positives sont transmises à la diode DE1 compte tenu de son sens de branchement, et de là, à travers la fibre F1, à la diode photoréceptrice DR1. De même les parties négatives sont transmises à la diode DE2 et de là, via la fibre F2 à la diode photoréceptrice DR2. On a noté sur la figure 1 de manière respective les puissances correspondant aux parties positives et négatives du signal d'entrée sous l'expression P ($V_e+$) et P($V_e-$). Ces puissances sont reproduites sur la figure 2 par les signaux S1 et S2 respectivement pour le signal d'entrée $V_e$ centré sur la valeur zéro du courant de polarisation. Etant donné que les caractéristiques de réponse des diodes présentent au voisinage du zéro une courbure et qu'il est préférable de s'affranchir de travailler dans cette zone pour avoir une réponse linéaire, on préfère fonctionner en classe AB moyennant un faible courant de polarisation comme représenté sur la figure 3. En conséquence, la consommation en l'absence de signal d'entrée n'est pas nulle mais reste très faible, par exemple le dixième de sa valeur pour un fonctionnement en classe A.

De manière préférée l'alimentation continue des diodes d'émission sera produite par un circuit générateur de tension AL compensé en température pour annuler les dérives des diodes. Ce circuit est considéré réalisé selon des techniques connues, à titre d'exemple, il peut constituer en un circuit INTERSIL du type ICL7663. Les résistances R1 et R2 ont des valeurs déterminées de manière à produire l'équilibrage dynamique et compenser la différence entre les résistances dynamiques représentées par les diodes. Le courant de polarisation $I_o$ sera de l'ordre de quelques microampères à quelques milliampères.

La figure 4 représente une variante du montage émetteur dans le cas de signaux de grande amplitude par rapport à la tension présentée aux bornes de la diode au repos, cette valeur étant de 1,5 à 2 volts. On peut considérer comme signaux très importants les signaux dont l'amplitude absolue peut atteindre ou dépasser une vingtaine de volts. Dans ce cas il n'est pas nécessaire de polariser les diodes DE1 et DE2, on peut faire abstraction du montage AB et fonctionner directement en classe B avec un courant nul au repos les deux extrémités du montage étant connectées à la masse.

Côté récepteur, les signaux détectés par les diodes DR1 et DR2 doivent être sommés pour reformer en sortie $V_s$ le signal d'origine. Ce montage sommateur dépend du sens de connexion des diodes DR1 et DR2. Deux cas de figures sont possibles. Dans un premier cas le montage sommateur effectue la somme des signaux détectés, dans un deuxième cas, le montage sommateur effectue la différence des signaux détectés, selon que les diodes sont connectées de sens inverse ou de même sens comme il apparaîtra maintenant à l'aide des figures 5 à 10 qui représentent différentes formes de réalisation du circuit récepteur.

Dans le cas de la figure 5 les diodes sont de sens inverse connectées l'une à une source continue $+V_{cc}$ et l'autre à une source continue de signe inverse $-V_{cc}$. Les résistances R11 et R13 en série avec ces diodes permettent l'équilibrage dynamique des deux voies et les connexions en aval sont regroupées pour sommer les signaux sur la borne d'entrée + d'un circuit transimpédance AT.

Sur le schéma figure 6 le circuit sommateur est du type à résistances. Ce montage présente une consommation nulle au repos mais des performances limitées.

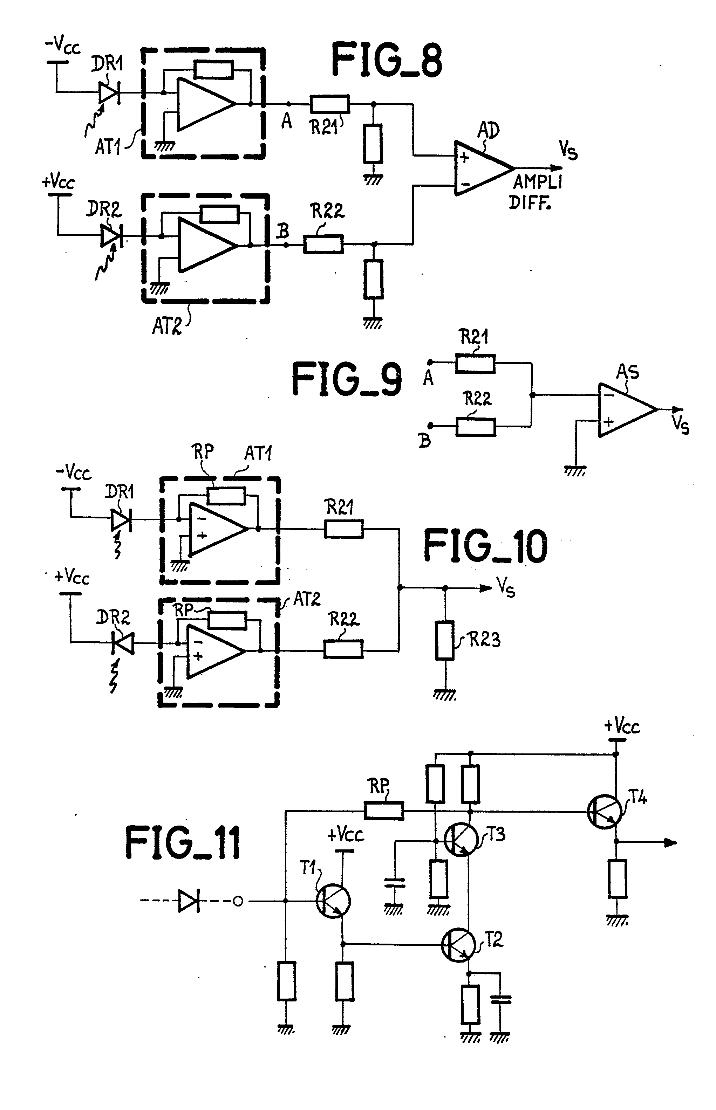

Suivant la figure 7 les diodes réceptrices sont de même sens, alimentées à partir d'une alimentation continue $-V_{cc}$, la sortie d'une diode est appliquée à la borne positive et l'autre à la borne négative d'un amplificateur différentiel AD.

Sur la figure 8 on a encore un montage récepteur avec des diodes connectées de même sens et alimentées l'une par une alimentation $-V_{cc}$, l'autre par une alimentation $+V_{cc}$. Chaque diode est suivie d'un circuit transimpédance, respectivement AT1 et AT2, et la sortie des circuits transimpédances est appliquée à travers les résistances d'équilibrage dynamique R21 et R22 à un amplificateur différentiel AD. Si l'on inverse le sens d'une des diodes du montage figure 8, les sorties AB des amplificateurs transimpédance seront connectées à un circuit sommateur comme représenté sur le schéma partiel figure 9 où les résistances R21 et R22 d'équilibrage sont réunies en sortie et connectées à un étage amplificateur de sortie AS de manière à obtenir le gain désiré.

Un montage équivalent est représenté sur la figure 10 avec cette fois un sommateur entièrement composé de résistances groupant les résistances R21, R22 déjà citées et la résistance R23.

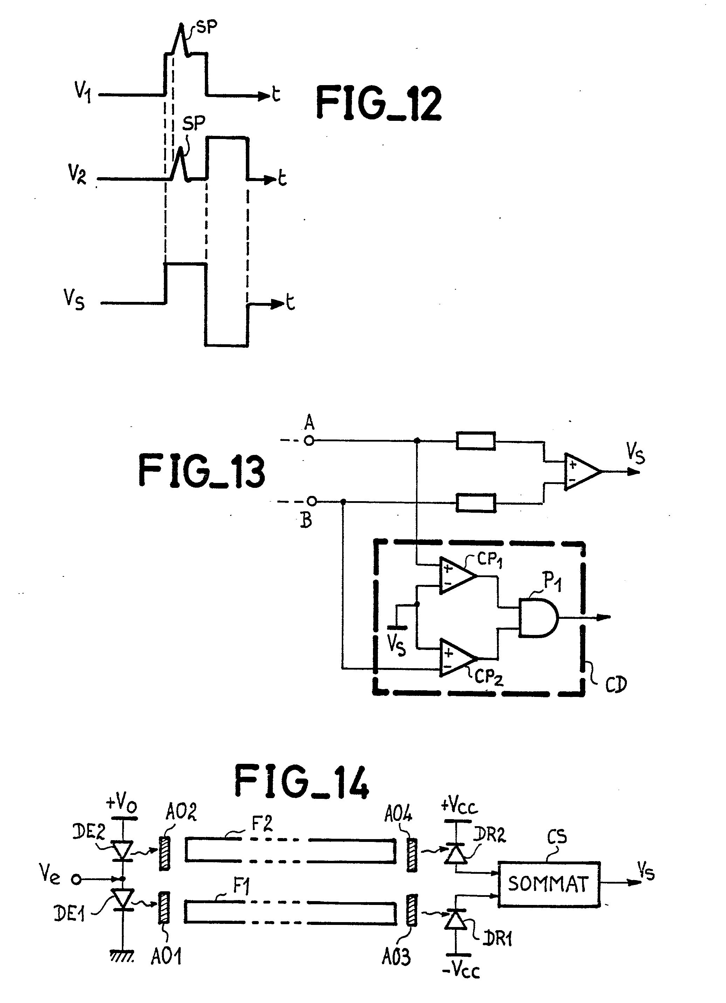

La figure 11 représente à titre d'exemple une réalisation possible du montage amplificateur transimpédance AT à l'aide de transistors T1 à T4, les étages T1 et T4 étant du type suiveur et l'ensemble T2 et T3 correspondant à un montage cascade. La résistance RP représente la résistance de transimpédance.

On a montré ainsi différentes formes possibles de réalisations du récepteur.

Le conducteur optique sera avantageusement constitué avec un câble unique contenant deux fibres optiques.

Les avantages du système selon l'invention consistent essentiellement en sa consommation très faible à l'émission puisque le point de fonctionnement peut se situer aux alentours de un $\mu$ W de consommation en classe B, à la place de 50 $\mu$ W nécessaires en classe A. De plus la classe B autorise une excursion de puissance qui peut être considérée sensiblement du double de celle possible en classe A, pour une puissance maximale de 100 $\mu$ W dans l'exemple considéré. Pour ces valeurs l'amélioration est de l'ordre de 23dB pour le rapport signal/bruit.

Un autre avantage est que le système présente une grande immunité aux parasites électromagnétiques, aux rayonnements gamma, aux neutrons, aux flashs, etc... Les courants parasites étant produits simultanément sur les deux voies sont éliminés au niveau du récepteur par la sommation ou la différence en aval des diodes détectrices. Ceci est illustré par les formes d'ondes de la figure 12 où l'on a considéré à titre de simplification une sinusoïde tronquée pour le signal $V_e$ soit deux signaux carrés, l'un positif et l'autre négatif. Le signal V1 correspond à l'impulsion positive transmise par la fibre F1 et le signal V2 à l'impulsion négative transportée par la fibre F2. Du fait de la sommation le signal parasite SP se trouve bien éliminé et n'apparaît plus sur le signal $V_s$ en sortie.

Une autre particularité du montage est de permettre la détection de ces parasites. En effet, en se reportant à la figure 13 et en considérant à nouveau les points A et B du récepteur, ces sorties sont appliquées d'une part aux sommateurs et d'autre part à un circuit détecteur de perturbations CD qui peut être constitué comme représenté sur la figure 13 par deux comparateurs à sortie numérique CP1 et CP2 et par un circuit ET P1. Les comparateurs à seuil CP1 et CP2 comparent respectivement les signaux des voies A et B à un seuil VS et en cas de détection d'un parasite supérieur au seuil VS déterminé pour s'affranchir des signaux parasites de bruit, les sorties des comparateurs ont la valeur 1. En conséquence, une sortie égale à 1 de la porte P1 correspond à la détection d'un parasite, la valeur zéro du signal VP correspond à l'absence de parasite c'est-à-dire à un fonctionnement normal.

La figure 14 représente un autre mode de compensation des voies optiques à l'aide de dispositifs atténuateurs optiques à densité variable représentés par les éléments AO1 et AO2 du côté émetteur entre les diodes et les entrées des fibres F1 et F2, et par AO3 et AO4 du côté récepteur (si l'on utilise le même mode de compensation pour le récepteur) entre les sorties des fibres et les diodes réceptrices.

Le système de transmission d'information par conducteur optique proposé convient avantageusement à la transmission d'information analogique ou de signaux du même genre, par exemple des signaux numériques à trois états +1,0,-1 qui présentent des parties positives constituées par le niveau +1 et des parties négatives constituées par le niveau -1, le niveau zéro correspondant au point de fonctionnement au repos.

**Revendications**

1. Système de transmission d'information par conducteur optique groupant, un émetteur à deux diodes photoémettrices (DE1, DE2) montées en push-pull pour moduler un signal lumineux d'émission par un signal électrique ($V_e$) composé de parties

positives et de parties négatives et représentant l'information à transmettre, un récepteur comportant également deux diodes (DR1, DR2), et le conducteur comportant deux voies optiques (F1,F2) reliant chacune une diode photoémettrice à une diode photoréceptrice, le signal lumineux modulé transmis par une première voie correspondant aux parties positives et celui transmis par la deuxième voie correspondant aux parties négatives, le récepteur comportant un montage sommateur - (CS,AD) alimenté par les diodes photoréceptrices pour sommer les signaux détectés et reconstituer le signal électrique ($V_s$), ledit système étant caractérisé en ce que les diodes photoréceptrices PIN ou APD sont connectées entre un générateur de tension de polarisation et le montage sommateur lequel est un circuit à large bande constitué par un amplificateur différentiel (AD) lorsque les signaux détectés fournis sont de même polarité et par un circuit somme (CS) lorsque les signaux détectés sont de polarité inverse, et en ce qu'il comporte, en outre, des moyens d'équilibrage dynamique des deux voies (R5, R6 -AO1 à AO4) et un circuit détecteur de parasites (CD) alimenté par les signaux détectés.

2. Système selon la revendication 1, caractérisé en ce que lesdits conducteurs optiques sont réalisés par un câble qui comporte deux fibres optiques - (F1,F2).

3. Système selon la revendication 1 ou 2, caractérisé en ce que les diodes photoémettrices - (DE1,DE2) sont des diodes électroluminescentes fonctionnant en classe B ou AB.

4. Système selon la revendication 3, caractérisé en ce que ledit fonctionnement en classe B ou AB est obtenu par un courant de polarisation fourni par un générateur de tension annexe (AL), compensé en température.

5. Système selon l'une quelconque des revendications 1 à 4 caractérisé en ce que les moyens d'équilibrage dynamique sont constitués par des éléments résistifs (R5,R6) connectés en série avec les diodes photoréceptrices.

6. Système selon l'une quelconque des revendications 1 à 4 caractérisé en ce que les moyens d'équilibrage dynamique sont constitués par un dispositif atténuateur optique (AO1, AO2, AO3, AO4) disposé entre une extrémité du conducteur et la diode associée correspondante sur chacune des voies côté émission, ou côté réception, ou côtés émission et réception à la fois.

7. Système selon l'une quelconque des revendications précédentes caractérisé en ce que le circuit détecteur de parasites (CD) est constitué par deux circuits comparateurs (CP1,CP2) pour comparer les sorties de détection des deux diodes photoréceptrices à un niveau de seuil prédéterminé, lesdits comparateurs étant à sortie numérique et alimentant une porte ET logique (P1).

8. Système selon l'une quelconque des revendications précédentes utilisé pour la transmission d'informations analogiques ou d'informations numériques à trois états.

# FIG_1

# FIG_2

# FIG_3

FIG_4

FIG_5

FIG_6

FIG_7

FIG_8

FIG_9

FIG_10

FIG_11

FIG_12

FIG_13

FIG_14

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| | | | H 04 B    9/00 |
| X | FR-A-2 500 972  (ETAT FRANCAIS) <br> * Revendications 1-4,7 * | 1-4,8 | |
| Y | | 5 | |
| | --- | | |
| X | WO-A-8 202 632  (WESTERN) <br> * Figure 1 * | 1,2,8 | |
| | --- | | |
| X | US-A-4 054 834  (BOIRAT) <br> * Colonne 2, lignes 27-33 * | 1,2,8 | |
| Y | | 5 | |
| | --- | | |
| A | PATENTS ABSTRACTS OF JAPAN, vol. 6, no. 194 (E-134) [1072], 2 octobre 1982, & JP - A - 57 106 247 (HITACHI) 02-07-1982 <br> * Figures * | 1 | DOMAINES TECHNIQUES RECHERCHES (Int. Cl.4) <br><br> H 04 B |
| | ----- | | |

Le présent rapport de recherche a été établi pour toutes les revendications

| Lieu de la recherche | Date d'achèvement de la recherche | Examinateur |
|---|---|---|
| LA HAYE | 10-07-1986 | GEISLER J.A.R. |